# FASCICULE DE BREVET EUROPEEN

(11) **EP 1 793 212 B1**
(45) Date de publication et mention de la délivrance du brevet: **07.08.2013**
(21) Numéro de dépôt: 06291833.9
(22) Date de dépôt: 28.11.2006
(51) Int. Cl.: G01J 3/453, G01J 3/28

(54) **Spectrophotometre à la large fente d'entrée**
Spektrophotometer mit breiter Eintrittsspalte
Spectrophotometer with a wide entrance slit

(30) Priorité: 01.12.2005 FR 0512209
(43) Date de publication de la demande: 06.06.2007
(73) Titulaire: ASTRIUM SAS, 92150 Suresnes (FR)
(72) Inventeur: Pasternak, Frédérick, 31590 Gaure (FR)
(74) Mandataire: Cabinet Plasseraud

(56) Documents cités:
- FR-A- 2 858 404

## Description

La présente invention concerne un procédé d'imagerie utilisant spectrophotomètre dans lequel sont associés un interféromètre et un système dispersif.

Un tel interféromètre est connu, notamment de la demande de brevet français 2 858 404, publiée le 4 février 2005, au nom du titulaire de la présente demande de brevet. Il permet d'obtenir simultanément une image d'un champ dans lequel se trouve des sources lumineuses, et une analyse spectrale de la lumière émise par ces sources. En particulier, il peut être destiné à des observations spatiales ou terrestres, lorsqu'il est associé à un télescope placé devant l'entrée du spectrophotomètre.

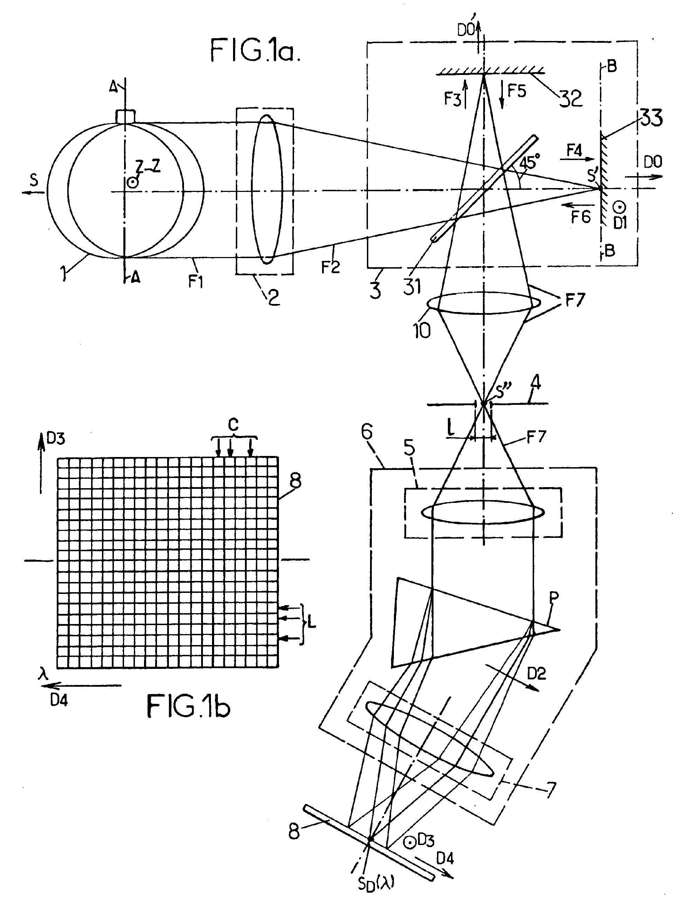

La figure 1a illustre un exemple d'agencement des différents éléments optiques au sein d'un tel spectrophotomètre. Pour raison de clarté, les dimensions des éléments optiques représentés dans cette figure et les distances entre ces éléments ne sont pas en proportion avec des dimensions et des distances réelles. Par ailleurs, dans ce qui suit, les éléments optiques connus de l'Homme du métier ne sont pas décrits en détail. Des indications sont seulement données concernant leur utilisation au sein du spectrophotomètre.

Conformément à la figure 1a, un interféromètre à transformation de Fourier 3 est disposé pour recevoir en entrée un faisceau lumineux primaire F2 et pour délivrer en sortie un faisceau lumineux intermédiaire F7. Le faisceau primaire F2 peut être, par exemple, issu d'une source S destinée à être observée et située dans le champ d'entrée de l'interféromètre 3.

Dans le cas d'un spectrophotomètre d'observation spatiale ou terrestre, la source S est située à grande distance du spectrophotomètre. Seule la direction dans laquelle se situe la source S est alors représentée sur la figure. Dans le jargon de l'Homme du métier, la source S est dite «située à l'infini». Une optique d'entrée 2, qui peut être de type télescope, produit le faisceau primaire F2 à partir d'un faisceau lumineux d'entrée F1 émis par la source S. L'optique d'entrée 2 forme une image S' de la source S. Il est entendu que le principe de fonctionnement qui est détaillé ici pour une source S située à l'infini est transposable au cas d'une source S située à distance finie du spectrophotomètre. Les modalités d'une telle transposition, qui ne sont pas spécifiques au système décrit, sont bien connues.

L'interféromètre à transformation de Fourier 3 produit un interférogramme de la lumière émise par la source S. Cet interférogramme s'étend selon une direction D1 de variation d'une différence de longueur de trajet optique, qui est orientée perpendiculairement au plan de la figure 1a.

L'interféromètre 3 peut être notamment du type Michelson. Il comprend alors :
- un dispositif de séparation 31 par division d'intensité du faisceau primaire F2 en deux faisceaux secondaires F3 et F4 ayant des directions de propagation respectives D0' et D0. D0 peut être la direction d'entrée du faisceau primaire F2 dans l'interféromètre 3, et D0' est conjuguée avec la direction D0 par le dispositif de séparation 31. Le dispositif de séparation 31 peut comprendre, par exemple, une lame semi-réfléchissante plane disposée dans un plan contenant la direction D1 et tourné de 45 degrés par rapport à la direction D0 ;
- deux miroirs 32 et 33 disposés de façon à réfléchir respectivement les faisceaux secondaires F3 et F4, pour former un premier et un second faisceaux secondaires réfléchis F5 et F6 ; et
- un dispositif de regroupement disposé pour regrouper les faisceaux secondaires réfléchis F5 et F6 afin de former le faisceau intermédiaire F7. De façon connue pour des interféromètres de type Michelson, le dispositif de séparation 31 remplit aussi la fonction de regroupement des faisceaux secondaires réfléchis F5 et F6.

Sur la figure 1a, par souci de clarté, les faisceaux F3-F6 ne sont représentés que par leurs directions de propagation respectives.

Les miroirs 32 et 33 peuvent être tous les deux plans. Ils présentent chacun une orientation déterminée, respectivement par rapport aux directions de propagation des faisceaux secondaires F3 et F4. Le miroir 32 est perpendiculaire à la direction D0', et le miroir 33 peut être incliné autour d'un axe B-B perpendiculaire aux directions D0 et D1. L'angle d'inclinaison du miroir 33 est par exemple compris entre 0,2 degré et 5 degrés.

Une différence de longueur de trajet optique résulte des inclinaisons respectives des miroirs 32 et 33, entre deux parties d'un même rayon lumineux du faisceau primaire F2 séparées par le dispositif 31. Ces parties de rayon lumineux appartiennent respectivement aux faisceaux secondaires F3 et F4, et sont chacune réfléchies par le miroir 32 ou 33. Les parties de rayon réfléchies appartiennent aux faisceaux secondaires réfléchis F5 et F6, et sont regroupées par le dispositif 31 dans le faisceau intermédiaire F7. Le faisceau intermédiaire F7 correspond donc à une figure d'interférence des faisceaux secondaires réfléchis F5 et F6. La différence entre les longueurs des trajets optiques suivis par les deux parties de rayon lumineux dépend de la position du point de réflexion de chacune d'elles sur les miroirs 32 et 33. Elle dépend plus précisément de la position des points de réflexion repérée selon la direction D1. Autrement dit, cette différence de longueur de trajet optique varie lors d'un déplacement des points de réflexion selon la direction D1, c'est-à-dire lors d'un déplacement de la source S dans un plan perpendiculaire à celui de la figure 1a et contenant la direction D0. La direction D1 est aussi perpendiculaire à la direction de propagation du faisceau intermédiaire F7.

La distance entre l'interféromètre 3 et l'optique d'entrée 2 est ajustée de sorte que l'image S' de la source S est formée à l'intérieur de l'interféromètre 3, sensiblement au niveau des miroirs 32 et 33. L'image S' correspond alors au point de réflexion du faisceau secondaire F4 sur le miroir 33.

Un système dispersif 6 est disposé de façon à recevoir en entrée le faisceau intermédiaire F7. Il peut comprendre une optique de collimation 5, un prisme P et une optique de focalisation 7 agencés de sorte que la lumière du faisceau intermédiaire F7 traverse successivement l'optique de collimation 5, le prisme P puis l'optique de focalisation 7. Sur la figure 1a, les optiques 2, 5 et 7 sont symboliquement représentées par des lentilles, mais elles peuvent être chacune constituées d'un ensemble optique complexe. L'optique de collimation 5 est par exemple agencée de façon à transformer le faisceau intermédiaire F7 en un faisceau parallèle qui traverse le prisme P. L'optique de focalisation 7 est agencée pour former une image finale S_{D}(λ) de la source S dans un plan conjugué avec le miroir 32. Le prisme P disperse angulairement la lumière issue du faisceau intermédiaire F7 selon une direction D2 sensiblement perpendiculaire à la direction de propagation de la lumière. Un ensemble d'images S_{D}(λ) correspondant à des longueurs d'onde dispersées λ différentes sont ainsi formées simultanément. Les images S_{D}(λ) sont décalées entre elles selon une direction D4 conjuguée avec la direction de dispersion D2 par l'optique de focalisation 7.

De façon connue, le prisme P peut être remplacé par un réseau de diffraction, sans changer le fonctionnement du spectrophotomètre.

L'interféromètre 3 et le système dispersif 6 sont orientés l'un par rapport à l'autre de sorte que la direction de dispersion D2 est sensiblement perpendiculaire à la direction D1 de variation de la différence de longueur de trajet optique.

Enfin, une matrice plane de photodétecteurs 8 est disposée dans le plan conjugué avec le miroir 32 qui contient les images S_{D}(λ). Par conséquent, un spectrophotomètre du type considéré dans la présente invention possède une fonction d'imagerie : il produit, sur la matrice de photodétecteurs 8, une image de chaque source S située dans le champ d'entrée. Conformément à la figure 1b, la matrice 8 est constituée de photodétecteurs répartis en colonnes C et en lignes L perpendiculaires aux colonnes. Les colonnes C sont parallèles à une direction D3 et les lignes de la matrice 8 sont parallèles à une direction D4. La direction D4 est par conséquent la direction de décalage des colonnes C de la matrice 8 les unes par rapport aux autres.

Au sein du spectrophotomètre, la matrice de photodétecteurs 8 est orientée de sorte que la direction D3 des colonnes C est conjuguée avec la direction D1 de variation de la différence de longueur de trajet optique. Dans le cas d'un système tel que représenté sur la figure 1a, la direction D3 est parallèle à la direction D1. La direction D4 correspond alors à la direction de dispersion D2.

Selon un mode de réalisation préféré d'un tel spectrophotomètre, l'un au moins des deux miroirs de l'interféromètre, par exemple le miroir 33, est de type à échelette. Il est constitué de faces élémentaires perpendiculaires à la direction D0, en forme de lames planes réfléchissantes allongées parallèlement à l'axe B-B, et décalées les unes par rapport aux autres selon la direction D0. Le décalage de chaque face élémentaire selon la direction D0 définit la différence de longueur de trajet optique, et varie selon la direction D1. La largeur des faces élémentaires du miroir 33 est en outre ajustée de sorte que le produit de cette largeur par le grandissement optique présent entre le miroir 33 et la matrice de photodétecteurs 8 est égal à la dimension des photodétecteurs de la matrice 8 selon la direction D3. Chaque face élémentaire du miroir 33 est alors conjuguée avec une ligne L de photodétecteurs. Dans ce cas, le nombre de photodétecteurs dans une colonne C de la matrice 8 est de préférence au moins égal au nombre de faces élémentaires du miroir 33.

Les miroirs 32 et 33 peuvent aussi être tous les deux du type à échelette. Dans ce cas, la différence de longueur de trajet optique résulte des décalages des faces élémentaires des deux miroirs. En particulier, ils peuvent alors être agencés de sorte que les faces optiques élémentaires de chacun des deux miroirs sont respectivement conjuguées optiquement avec celles de l'autre miroir par le dispositif de séparation 31.

Une optique intermédiaire 10 peut en outre être placée sur le trajet du faisceau intermédiaire F7 de façon à produire une image intermédiaire S" de la source S. Une fente rectangulaire 4 est disposée au niveau de l'image S", dans un plan sensiblement perpendiculaire à la direction de propagation du faisceau intermédiaire F7. La fente 4 présente une grande longueur parallèle à la direction D1 et une largeur I parallèle à la direction D0. De façon connue, la fente 4 joue le rôle de fente d'entrée du système dispersif 6, et chaque colonne de photodétecteurs C de la matrice 8 possède une fonction de fente de sortie du système dispersif 6.

De façon facultative, un dispositif de balayage optique 1 à deux axes peut en outre être disposé sur le trajet du faisceau d'entrée F1. Le premier axe de rotation du dispositif de balayage 1 est perpendiculaire aux directions D0 et D0', et est noté Z-Z. Le second axe de rotation du dispositif 1, noté A-A, est perpendiculaire à l'axe Z-Z, et peut tourner autour de ce dernier. Une ouverture d'entrée du dispositif de balayage 1 parcourt alors un champ d'observation dans lequel se trouve la source lumineuse S, de sorte que le faisceau d'entrée F1 possède, à la sortie du dispositif de balayage 1, une direction de propagation qui est fixe par rapport au spectrophotomètre et sensiblement parallèle à la direction D0. Lors d'une rotation du dispositif de balayage 1 autour de l'axe Z-Z, l'image S' de la source S se déplace parallèlement à l'axe B-B. Lors d'une rotation du dispositif de balayage 1 autour de l'axe A-A, l'image S' de la source S se déplace parallèlement à la direction D1.

Le fonctionnement d'un tel spectrophotomètre est maintenant décrit. Des images S_{D}(λᵢ) d'une même source lumineuse S sont formées sur chaque colonne C de la matrice de photodétecteurs 8. La longueur d'onde dispersée λᵢ est définie par le décalage selon la direction D4 de la colonne C considérée. Elle est en fait une valeur moyenne qui correspond sensiblement à la position du milieu de la colonne C considérée, selon la direction D4.

Simultanément, lors d'une rotation du dispositif de balayage 1 autour de l'axe A-A, les photodétecteurs de chaque colonne C de la matrice 8 enregistrent un interférogramme de la lumière du faisceau d'entrée F1. La direction D3 est donc simultanément une direction d'interférogramme et une direction spatiale de déplacement dans l'image que le spectrophotomètre forme des sources situées dans le champ d'entrée. Par transformation de Fourier des énergies lumineuses reçues par les photodétecteurs de la colonne C correspondant à la longueur d'onde λᵢ, une évaluation précise de la distribution spectrale d'énergie dans un intervalle centré autour de λᵢ peut être calculée.

On appelle résolution spatiale, selon la direction D3 ou la direction D4, la distance minimale de séparation entre deux sources lumineuses dont les images sur la matrice 8 sont décalées selon la direction D3 ou D4, respectivement. Dans le cas de sources situées à l'infini, la distance entre les sources lumineuses est une distance angulaire. La résolution spatiale selon la direction D3 est fixée par la dimension d'un photodétecteur de la matrice 8 selon cette même direction. La résolution spatiale selon la direction D4 est fixée par la largeur I de la fente 4.

On appelle résolution spectrale l'écart minimal entre deux longueurs d'onde pour lesquelles des intensités lumineuses respectives peuvent être mesurées ou déduites séparément l'une de l'autre. De façon connue, la résolution spectrale de l'interféromètre 3, qui apparaît selon la direction D3, est liée au nombre de détecteurs d'une colonne C de la matrice 8. La résolution spectrale du système dispersif 6, qui apparaît selon la direction D4, résulte de la largeur I de la fente 4 et de la dimension des photodétecteurs de la matrice 8 selon la direction D4.

Dans la suite, Y désigne un axe de déplacement dans l'image que le spectrophotomètre forme de sources lumineuses situées dans le champ d'entrée, qui correspond à la direction D4. De même, DS désigne un axe de variation de longueur d'onde de la lumière détectée lors d'un déplacement sur la matrice 8 parallèle à la direction D4. DS est appelé axe de dispersion spectrale et correspond à la fonction de dispersion du système 6.

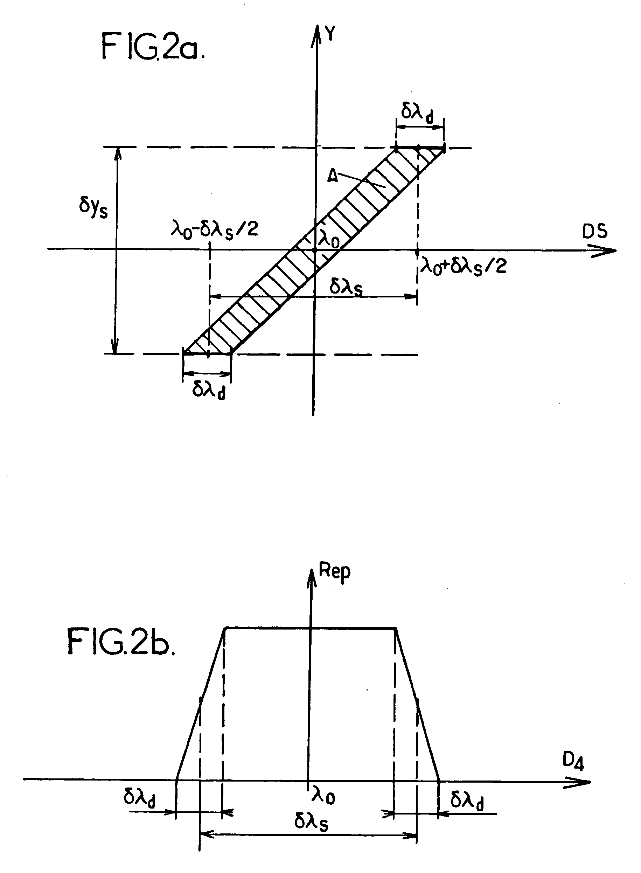

La figure 2a illustre l'origine des contributions à l'énergie lumineuse détectée selon une ligne de la matrice 8, dans un diagramme repéré par les axes DS et Y. L'axe de dispersion spectrale DS est en abscisse et l'axe de déplacement Y est en ordonnée. A un point central de ce diagramme correspond la longueur d'onde λ₀, qui est prise pour origine de la dispersion générée par le système 6.

Les résolutions spatiales et spectrales qui sont discutées dans la suite sont visualisées, par équivalence, dans ce diagramme. Les deux bords opposés de la fente 4 correspondent à des images respectives sur la matrice 8 qui sont séparées par une distance δyₛ (l'indice s signifiant «slit» en anglais) selon la direction Y. La distance δyₛ est égale à la largeur I de la fente 4 multipliée par le grandissement optique G généré par la partie du spectrophotomètre présente entre le plan de la fente 4 et celui de la matrice de photodétecteurs 8 (δyₛ= I x G). Les points de la ligne de matrice 8 qui correspondent aux images des deux bords de la fente 4 peuvent aussi correspondre à des éclairements détectés pour les longueurs d'onde respectives λ₀-δλₛ/2 et λ₀+δλₛ/2, où δλₛ est une première contribution à la résolution spectrale du système dispersif 6 générée par la fente 4.

Enfin, la dimension de chaque détecteur de la matrice 8, mesurée selon la direction D4, engendre une seconde contribution à la résolution spectrale du système dispersif. Cette seconde contribution est notée δλ_{d} et est aussi appelée pas d'échantillonnage spectral des photodétecteurs. Elle est égale à la dimension d des photodétecteurs selon la direction D4, divisée par un coefficient ┌ de dispersion linéaire du système 6 (δλ_{d}= d / ┌).

L'aire de la surface hachurée A est une mesure de l'énergie lumineuse détectée par les photodétecteurs d'une ligne L de la matrice 8, et qui peut être attribuée à la longueur d'onde centrale λ₀.

Le diagramme de la figure 2a fait apparaître que la distance notée δyₛ est la résolution spatiale selon la direction D4. En effet, des énergies lumineuses qui sont détectées respectivement en deux points d'une ligne L de la matrice 8 séparés d'une distance inférieure à δyₛ peuvent correspondre à des rayonnements ayant des longueurs d'onde différentes et qui proviennent d'une même source lumineuse S.

Pour améliorer la résolution spatiale selon la direction D4, il est alors d'usage de diminuer la largeur I de la fente 4 jusqu'à ce que la distance δyₛ sur la matrice 8 corresponde à la dimension des photodétecteurs selon la direction D4. Autrement dit, la largeur I de la fente 4 est usuellement ajustée de sorte que la largeur de l'image de la fente 4 sur la matrice 8 est égale à l'épaisseur d'une colonne C de photodétecteurs : I = d / G de sorte que δyₛ = d. Le champ d'entrée du spectrophotomètre dont une image est formée sur la matrice 8 lors d'une même exposition est alors une bande très étroite, dont la largeur dans l'image correspond à celle d'une seule colonne de photodétecteurs. Ce champ d'entrée qui est visualisé par le spectrophotomètre lors d'une exposition unique est donc très réduit.

Par conséquent, lorsque le spectrophotomètre est associé au système de balayage 1, le balayage par rotation autour de l'axe Z-Z doit être réalisé avec un pas très court pour obtenir des enregistrements correspondant à des bandes contiguës dans un champ d'observation. La durée du balayage qui en résulte est alors très importante.

La figure 2b illustre la fonction de réponse spectrale du spectrophotomètre, notée Rep, le long d'une ligne L de la matrice de photodétecteurs 8.

Un but de la présente invention consiste alors à proposer un procédé d'imagerie utilisant un spectrophotomètre du type considéré ci-dessus, qui possède un champ d'entrée élargi selon la direction Y sans dégrader la résolution.

Pour cela, l'invention propose un procédé d'imagerie tel que décrit dans la revendication 1.

Selon l'invention, l'interféromètre présente une résolution spectrale inférieure au pas d'échantillonnage spectral des photodétecteurs selon la direction des lignes de la matrice. En outre, la largeur de la fente est adaptée pour qu'une résolution spectrale du système dispersif engendrée par la fente soit supérieure au pas d'échantillonnage spectral des photodétecteurs selon la direction des lignes de la matrice.

La fente permet alors de former, sur la matrice de photodétecteurs en une seule exposition, une image d'une large bande de champ d'entrée. Grâce à l'invention, deux points qui émettent de la lumière et qui sont alignés selon la largeur de cette bande peuvent être distingués l'un de l'autre dans l'information extraite des énergies lumineuses détectées. Un balayage d'un champ d'observation dans une direction correspondant aux lignes de la matrice de photodétecteurs peut alors être réalisé avec un pas important, tout en obtenant une couverture complète composée de bandes de champ d'entrée contiguës. Le nombre d'expositions nécessaires pour couvrir l'ensemble d'un champ d'observation est alors réduit, et la durée totale du balayage est compatible avec une utilisation du spectrophotomètre à bord d'un satellite.

En outre, grâce à l'invention, une résolution spatiale effective du spectrophotomètre est obtenue selon la direction des lignes de la matrice de photodétecteurs, qui est inférieure à celle qui résulterait seulement de la largeur de la fente. Une telle amélioration de la résolution est obtenue en reportant les mesures d'énergies lumineuses recueillies selon la direction des colonnes de la matrice de photodétecteurs dans celles recueillies selon la direction des lignes de la matrice.

Selon un mode de réalisation préféré de l'invention, la largeur de la fente est en outre adaptée pour qu'une dimension de l'image de la fente sur la matrice de photodétecteurs est égale à la dimension des photodétecteurs multipliée par R, ces dimensions étant mesurées selon la direction des lignes de la matrice de photodétecteurs, et R étant le quotient du pas d'échantillonnage spectral des photodétecteurs selon la direction des lignes de la matrice par la résolution spectrale de l'interféromètre. L'interféromètre est alors utilisé de façon optimale pour améliorer la résolution spatiale selon la direction des lignes de la matrice de photodétecteurs.

Avantageusement, l'interféromètre comprend un appareil de Michelson. Cet appareil de Michelson peut être lui-même pourvu d'un miroir plan et d'un miroir à échelette disposés pour réfléchir des parties respectives d'un faisceau lumineux émis par une source située dans le champ d'entrée du spectrophotomètre. Alternativement, les deux miroirs de l'appareil de Michelson peuvent être à échelette. Des mesures spatiales et spectrales de sources lumineuses peuvent alors être obtenues, qui sont particulièrement précises.

Le spectrophotomètre peut en outre comprendre un dispositif de balayage qui est disposé à l'entrée du spectrophotomètre, et qui possède deux directions de balayage respectivement conjuguées avec les directions des colonnes et des lignes de la matrice de photodétecteurs. La couverture d'un large champ d'observation par des expositions successives peut alors être réalisée rapidement, d'une façon automatique.

L'invention propose enfin un satellite comprenant un spectrophotomètre embarqué qui est conforme à l'invention. Un tel satellite peut être utilisé pour réaliser des observations spatiales ou terrestres pendant son déplacement orbital.

D'autres particularités et avantages de la présente invention apparaîtront dans la description ci-après d'exemples de réalisation non limitatifs, en référence aux dessins annexés, dans lesquels :
- la figure 1a est un schéma optique de principe d'un spectrophotomètre de l'art antérieur auquel l'invention peut être appliquée ;
- la figure 1b représente une matrice de photodétecteurs pouvant être utilisée dans le spectrophotomètre de la figure 1a ;
- la figure 2a est un diagramme de contribution à l'énergie lumineuse mesurée le long des lignes de la matrice de photodétecteurs de la figure 1b, pour un spectrophotomètre conforme à la figure 1a ;
- la figure 2b illustre les variations d'une fonction de réponse du spectrophotomètre caractérisé par la figure 2a, selon la direction des lignes de la matrice de photodétecteurs ;
- la figure 3a correspond à la figure 2a pour un spectrophotomètre selon l'invention ; et
- la figure 3b correspond à la figure 2b pour le spectrophotomètre selon l'invention caractérisé par la figure 3a.

Les figures 1a, 1b, 2a et 2b, relatives à l'art antérieur connu, ont déjà été décrites en détail.

On décrit maintenant un mode particulier de réalisation de l'invention. Un spectrophotomètre selon l'invention peut posséder une structure identique à celle décrite en relation avec les figures 1a et 1b. Le miroir à échelette 33 posséde N faces réfléchissantes élémentaires décalées selon un pas p. Chaque colonne C de la matrice 8 comprend N photodétecteurs, et la longueur de la fente 4 selon la direction D1 est suffisante pour qu'une image d'une tranche complète du miroir 33 parallèle à la direction D1 soit formée sur la matrice 8. Les lignes de la matrice 8 sont alors conjuguées optiquement une à une avec les faces réfléchissantes élémentaires du miroir 33. Ceci correspond à un modèle d'interféromètre pour lequel la position relative des miroirs 32 et 33 selon les directions D0 et D0' est initialement connue avec précision.

Selon la première caractéristique de l'invention, le nombre N est choisi de sorte que la résolution spectrale δλᵢ de l'interféromètre 3 est plus petite que la contribution δλ_{d} à la résolution spectrale du système dispersif 6 qui est due à la dimension d des photodétecteurs. On introduit le quotient R, qui est égal au pas d'échantillonnage spectral des photodétecteurs selon la direction D4, divisé par la résolution spectrale de l'interféromètre 3 : R = δλ_{d} / δλᵢ. R est supérieur à 1. Par exemple, N peut être égal à 64 ou 128.

La résolution spectrale δλₛ du système dispersif 6 qui est liée à la fente 4 est proportionnelle à la largeur δyₛ de l'image de celle-ci sur la matrice de photodétecteurs 8, selon la direction D4 : δλₛ = δyₛ / ┌ = I x G / ┌.

Selon la seconde caractéristique de l'invention, la largeur I de la fente 4 est choisie de sorte que δλₛ est supérieure au pas d'échantillonnage spectral δλ _{d} des photodétecteurs selon la direction des lignes L de la matrice. Pour cela, la largeur I doit être supérieure à d/G.

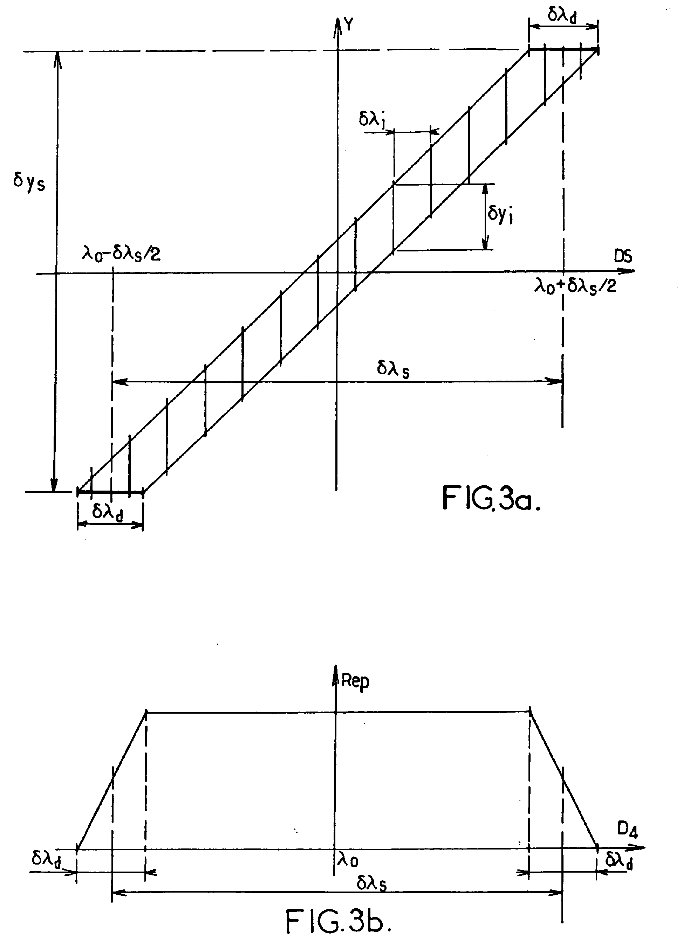

La figure 3a correspond à la figure 2a lorsque les caractéristiques de l'invention sont réalisées, c'est-à-dire δλᵢ < δλ_{d} < δλₛ. En reportant la résolution spectrale δλᵢ de l'interféromètre 3 sur la direction spectrale DS associée à la direction D4, on obtient une division de la variation de longueur d'onde le long de chaque ligne L en intervalles élémentaires, pour chacun desquels la distribution spectrale d'énergie lumineuse peut être déduite des énergies lumineuses détectées sur une des colonnes C de la matrice 8. Il apparaît alors une nouvelle résolution spatiale associée à la direction D4, qui est notée δyᵢ. Cette résolution spatiale δyᵢ résulte de la résolution spectrale δλᵢ et de la pente apparente dans le diagramme de la figure 3a des contributions à l'énergie lumineuse détectée. D'après la figure 3a : δyᵢ = δyₛ x δλᵢ / δλₛ. La résolution spatiale δyᵢ qui est obtenue est donc inférieure à la résolution spatiale δyₛ qui résulterait seulement de la largeur de la fente 4. On obtient : δyᵢ = ┌xδλᵢ, alors : δyᵢ < d. Autrement dit, la résolution spatiale selon la direction D4 telle qu'elle résulte de la combinaison selon l'invention des mesures effectuées au moyen du système dispersif 6 avec celles effectuées au moyen de l'interféromètre 3, est inférieure à celle qui résulte de la dimension de la fente. Cette résolution spatiale est obtenue bien que la largeur de la bande de champ d'entrée qui est visualisée en une seule exposition a été augmentée.

Préférentiellement, la largeur de la fente 4 est choisie de sorte que la dimension de l'image de la fente 4 sur la matrice de photodétecteurs 8 est égale à la dimension des photodétecteurs multipliée par N, ces dimensions étant considérées selon la direction D4. Autrement dit : δyₛ = N x d. Pour cela, I = N x d/G. La largeur de la bande de champ d'entrée qui est visualisée en une seule fois est alors augmentée d'un facteur N, tout en permettant une utilisation optimale des mesures effectuées au moyen de l'interféromètre 3 pour obtenir une faible résolution spatiale selon la direction D4.

Si la position relative des miroirs 32 et 33 n'est pas connue initialement, elle peut être déterminée en comparant les énergies lumineuses détectées pour des valeurs positives et négatives de la différence de longueur de trajet optique. Les décalages des faces réfléchissantes élémentaires du miroir 33 sont alors corrigés d'une quantité fixe de façon à obtenir une répartition d'énergie lumineuse détectée qui est symétrique entre des valeurs opposées de la différence de longueur de trajet optique.

La fente 4 permet de balayer un champ d'observation du spectrophotomètre, par rotation du dispositif 1 autour de l'axe Z-Z, avec des bandes de largeur importante, correspondant à la distance δyₛ sur la matrice 8. La vitesse de balayage du dispositif 1 autour de l'axe Z-Z peut alors être augmentée selon le rapport δyₛ / δyᵢ = δλₛ / (δλ_{d} + δλᵢ).

Par ailleurs, conformément à la figure 3b, la fonction de réponse Rep est plus homogène le long d'une ligne de photodétecteurs L. Des conditions de fonctionnement du spectrophotomètre en résultent, qui procurent une meilleure précision des résultats d'imagerie et d'analyse spectrale obtenus.

Enfin, un autre avantage d'un tel spectrophotomètre résulte du fait que la résolution spatiale et la résolution spectrale effectives sont fixées par la structure du miroir à échelette 33. Etant donné que l'ensemble du spectrophotomètre est statique, c'est-à-dire sans pièce mobile, l'exactitude des mesures, à la fois spatiales et spectrales, peut être très bonne lorsque le miroir 33 est calibré initialement avec précision et lorsqu'il est réalisé avec un matériau stable thermiquement et peu déformable.

Il est entendu que le principe de l'invention peut être appliqué identiquement à un spectrophotomètre dans lequel certains des éléments optiques décrits sont disposés dans un ordre différent sur le trajet des faisceaux lumineux. C'est le cas, en particulier, de la fente 4 qui peut être placée de façon équivalente à plusieurs endroits du spectrophotomètre. De même, l'invention peut être appliquée à un spectrophotomètre qui est adapté pour fonctionner à partir de lumière émise par des sources situées à distance finie de l'entrée du spectrophotomètre.

Bien que l'invention a été décrite en utilisant une optique intermédiaire 10 disposée à la sortie de l'interféromètre 3, une telle optique intermédiaire n'est pas indispensable pour la mise en oeuvre de l'invention. Elle peut donc être supprimée, notamment pour obtenir un spectrophotomètre plus léger et plus compact. Dans ce cas, la fente 4 est disposée au sein de l'interféromètre 3, par exemple sur les miroirs 32 et/ou 33.

Enfin, bien que l'invention a été décrite en détail pour un spectrophotomètre qui comprend un interféromètre à transformation de Fourier, il est entendu qu'elle peut être appliquée à un spectrophotomètre qui comprend un interféromètre d'un autre type. Il suffit pour cela que l'interféromètre soit agencé pour produire des interférogrammes à partir d'un faisceau lumineux d'entrée.

## Revendications

1. Procédé d'imagerie comprenant :
- fournir un spectrophotomètre à fonction d'imagerie comprenant :
. une matrice de photodétecteurs (8) répartis en colonnes (C) et lignes (L) selon deux directions perpendiculaires (D3, D4), ladite matrice de photodétecteurs étant placée dans un plan image du spectrophotomètre ;
. un interféromètre (3) disposé pour produire, sur une colonne de la matrice de photodétecteurs (C), un interférogramme d'une source lumineuse (S) située dans un champ d'entrée du spectrophotomètre ;
. un système dispersif (6) disposé sur le trajet de faisceaux lumineux traversant l'interféromètre (F7), et disposé pour disperser la lumière parallèlement aux lignes de la matrice de photodétecteurs (L) ;
. une fente (4) disposée dans un plan image intermédiaire entre l'entrée du spectrophotomètre et la matrice de photodétecteurs (8), ayant une direction de largeur (I) conjuguée avec la direction des lignes de la matrice des photodétecteurs (D4) ; et
. un dispositif de balayage (1) disposé à l'entrée du spectrophotomètre, et ayant deux directions de balayage respectivement conjuguées avec les directions des colonnes (D3) et des lignes (D4) de la matrice de photodétecteurs (8),
- à l'aide du spectrophotomètre, produire sur la matrice de photodétecteurs (8) une image de la source (S) située dans le champ d'entrée ;
- diviser une variation de longueur d'onde le long de chaque ligne (L) de la matrice de photodétecteurs (8) en intervalles élémentaires; et
- pour chaque intervalle élémentaire, reporter des mesures d'énergies lumineuses recueillies selon la direction des colonnes (D3) de la matrice de photodétecteurs (8) dans des mesures d'énergies lumineuses recueillies selon la direction des lignes (D4) de la matrice de photodétecteurs,
procédé dans lequel l'interféromètre (3) présente une résolution spectrale (δλᵢ) inférieure à un pas d'échantillonnage spectral des photodétecteurs (δλ_{d}) selon la direction des lignes de la matrice (L), et dans lequel la largeur (I) de la fente (4) est adaptée pour qu'une résolution spectrale du système dispersif engendrée par la fente (δλₛ) est supérieure au pas d'échantillonnage spectral des photodétecteurs selon la direction des lignes de la matrice (δλ_{d}),
le pas d'échantillonnage spectral des photodétecteurs (δλ_{d}) selon la direction des lignes de la matrice (L) étant égal à une dimension (d) des dits photodétecteurs selon ladite direction des lignes, divisée par un coefficient de dispersion linéaire du système dispersif (6), et
la résolution spectrale du système dispersif engendrée par la fente (δλₛ) étant égale à la largeur (I) de la fente (4) multipliée par un grandissement optique d'une partie du spectrophotomètre entre ladite fente et la matrice de photodétecteurs (8), et divisée par le coefficient de dispersion linéaire du système dispersif (6),
et une résolution spatiale (Syᵢ) de l'interferomètre (3) selon la direction des lignes (D4), qui est égale à la résolution spectrale (Syᵢ) dudit interferomètre multipliée par le coefficient de dispersion linéaire du système dispersif (6), étant inférieure à une dimension (Syₛ) d'une image de la fente (4) sur la matrice de photodétecteurs (8) selon ladite direction des lignes (D4).

2. Procédé d'imagerie selon la revendication 1, comprenant en outre :
- balayer un champ d'observation du spectrophotomètre par rotation du dispositif de balayage (1) selon la direction de balayage conjuguée avec la direction (D4) des lignes (L) de la matrice de photodétecteurs (8), avec des bandes de largeur correspondant à la dimension (δyₛ) de l'image de la fente (4) sur ladite matrice de photodétecteurs, selon ladite direction des lignes.

3. Procédé d'imagerie selon la revendication 1 ou 2, dans lequel la largeur de la fente (I) est en outre adaptée pour que la dimension (δyₛ) de l'image de la fente (4) sur la matrice de photodétecteurs (8) soit égale à la dimension des photodétecteurs (d) multipliée par R, lesdites dimensions de l'image de la fente et des photodétecteurs étant mesurées selon la direction des lignes de la matrice de photodétecteurs (D4), et R étant le quotient du pas d'échantillonnage spectral des photodétecteurs selon la direction des lignes de la matrice (δλ_{d}) par la résolution spectrale de l'interféromètre (δλᵢ).

4. Procédé d'imagerie selon l'une quelconque des revendications précédentes, dans lequel l'interféromètre (3) comprend un appareil de Michelson.

5. Procédé d'imagerie selon la revendication 4, dans lequel l'appareil de Michelson est pourvu d'un miroir plan (32) et d'un miroir à échelette (33) disposés pour réfléchir des parties respectives d'un faisceau lumineux émis par la source (S) située dans le champ d'entrée du spectrophotomètre.

6. Procédé d'imagerie selon la revendication 4, dans lequel l'appareil de Michelson est pourvu de deux miroirs à échelette (32, 33) disposés pour réfléchir des parties respectives d'un faisceau lumineux émis par la source (S) située dans le champ d'entrée du spectrophotomètre.

7. Procédé d'imagerie selon l'une quelconque des revendications 4 à 6, dans lequel la fente (4) est disposée au sein de l'interféromètre (3).

8. Procédé d'imagerie selon l'une quelconque des revendications précédentes, dans la largeur (I) de la fente (4) est telle que la dimension de l'image (δyₛ) de ladite fente sur la matrice de photodétecteurs (8) est égale à la dimension (d) des photodétecteurs multipliée par un nombre (N) des photodétecteurs dans chaque colonne (C) de ladite matrice de photodétecteurs.

9. Procédé d'imagerie selon l'une quelconque des revendications précédentes, dans lequel le spectrophotomètre est embarqué sur ledit satellite.

## Patentansprüche

1. Bildgebungsverfahren, umfassend:
- Bereitstellen eines Spektralphotometers mit Bildgebungsfunktion, umfassend:
· eine Matrix von Photodetektoren (8), die entlang zweier senkrechter Richtungen (D3, D4) auf Spalten (C) und Zeilen (L) verteilt sind, wobei die Photodetektorenmatrix in einer Bildebene des Spektralphotometers angeordnet ist;
· ein Interferometer (3), das gestaltet ist, um auf einer Spalte (C) der Photodetektorenmatrix ein Interferogramm einer Lichtquelle (S), die sich in einem Eingangsfeld des Spektralphotometers befindet, zu erzeugen;
· ein Streuungssystem (6), das auf dem Strahlengang der durch das Interferometer (F7) verlaufenden Lichtstrahlen angeordnet ist, um das Licht parallel zu den Zeilen (L) der Photodetektorenmatrix zu streuen;
· einen Schlitz (4), der in einer Bildzwischenebene zwischen dem Eingang des Spektralphotometers und der Photodetektorenmatrix (8) angeordnet ist und eine Breitenrichtung (1) aufweist, die der Zeilenrichtung (D4) der Photodetektorenmatrix zugeordnet ist; und
· eine Scanvorrichtung (1), die am Eingang des Spektralphotometers angeordnet ist und zwei Scanrichtungen aufweist, die der Spaltenrichtung (D3) bzw. der Zeilenrichtung (D4) der Photodetektorenmatrix (8) zugeordnet sind,
- Erzeugen (8) eines Abbildes der Quelle (S), die sich im Eingangsfeld befindet, auf der Photodetektorenmatrix (8) mit Hilfe des Spektralphotometers;
- Unterteilen einer Wellenlängenvariation entlang jeder Zeile (L) der Photodetektorenmatrix (8) in Grundintervalle und
- für jedes Grundintervall Übertragen von Lichtenergiemessungen, die entlang der Spaltenrichtung (D3) der Photodetektorenmatrix (8) gesammelt wurden, auf Lichtenergiemessungen, die entlang der Zeilenrichtung (D4) der Photodetektorenmatrix gesammelt wurden,
wobei
bei dem Verfahren das Interferometer (3) eine spektrale Auflösung (δλᵢ) aufweist, die kleiner als ein spektraler Abtastschritt der Photodetektoren (δλ_{d}) entlang der Zeilenrichtung (L) der Matrix ist, und bei dem die Breite (1) des Schlitzes (4) so gestaltet ist, dass eine durch den Schlitz entstehende spektrale Auflösung des Streuungssystems (δλₛ) größer als der spektrale Abtastschritt der Photodetektoren (δλ_{d}) entlang der Zeilenrichtung der Matrix ist,
der spektrale Abtastschritt der Photodetektoren (δλ_{d}) entlang der Zeilenrichtung (L) der Matrix gleich einer Abmessung (d) der Photodetektoren entlang der Zeilenrichtung dividiert durch einen linearen Streuungskoeffizienten des Streuungssystems (6) ist, und
die durch den Schlitz entstehende spektrale Auflösung des Streuungssystems (δλₛ) gleich der Breite (1) des Schlitzes (4) multipliziert mit einer optischen Vergrößerung eines Teils des Spektralphotometers zwischen dem Schlitz und der Photodetektorenmatrix (8) und dividiert durch den linearen Streuungskoeffizienten des Streuungssystems (6) ist,
und eine räumliche Auflösung (δyᵢ) des Interferometers (3) entlang der Zeilenrichtung (D4), die gleich der spektralen Auflösung des Interferometers (δλᵢ) multipliziert mit dem linearen Streuungskoeffizienten des Streuungssystems (6) ist, kleiner als eine Abmessung (δλₛ) eines Abbildes des Schlitzes (4) auf der Photodetektorenmatrix (8) entlang der Zeilenrichtung (D4) ist.

2. Bildgebungsverfahren nach Anspruch 1, umfassend ferner:
- Scannen eines Beobachtungsfeldes des Spektralphotometers durch Drehen der Scanvorrichtung (1) entlang der Scanrichtung, die der Richtung (D4) der Zeilen (L) der Photodetektorenmatrix (8) zugeordnet ist, mit Bandbreiten, die der Abmessung (δyₛ) des Abbildes des Schlitzes (4) auf der Photodetektorenmatrix entlang der Zeilenrichtung entsprechen.

3. Bildgebungsverfahren nach Anspruch 1 oder 2, wobei die Breite (1) des Schlitzes ferner so gestaltet ist, dass die Abmessung (δyₛ) des Abbildes des Schlitzes (4) auf der Photodetektorenmatrix (8) gleich der Abmessung der Photodetektoren (d) multipliziert mit R ist, wobei die Abmessungen des Abbildes des Schlitzes und der Photodetektoren entlang der Zeilenrichtung (D4) der Photodetektorenmatrix gemessen werden und R der Quotient aus dem spektralen Abtastschritt der Photodetektoren (δλ_{d}) entlang der Zeilenrichtung der Matrix und der spektralen Auflösung des Interferometers (δλᵢ) sind.

4. Bildgebungsverfahren nach einem der vorangehenden Ansprüche, wobei das Interferometer (3) ein Michelson-Gerät umfasst.

5. Bildgebungsverfahren nach Anspruch 4, wobei das Michelson-Gerät mit einem ebenen Spiegel (32) und einem Echelette-Spiegel (33) ausgestattet ist, die angeordnet sind, um jeweilige Teile eines Lichtstrahls, der von der im Eingangsfeld des Spektralphotometers befindlichen Quelle (S) ausgesandt wird, zu reflektieren.

6. Bildgebungsverfahren nach Anspruch 4, wobei das Michelson-Gerät mit zwei Echelette-Spiegeln (32, 33) ausgestattet ist, die angeordnet sind, um jeweilige Teile eines Lichtstrahls, der von der im Eingangsfeld des Spektralphotometers befindlichen Quelle (S) ausgesandt wird, zu reflektieren.

7. Bildgebungsverfahren nach einem der Ansprüche 4 bis 6, wobei der Schlitz (4) innerhalb des Interferometers (3) angeordnet ist.

8. Bildgebungsverfahren nach einem der vorangehenden Ansprüche, wobei die Breite (1) des Schlitzes (4) dergestalt ist, dass die Abmessung des Abbildes des Schlitzes (δy_{S}) auf der Photodetektorenmatrix (8) gleich der Abmessung (d) der Photodetektoren multipliziert mit einer Anzahl (N) der Photodetektoren in jeder Spalte (C) der Photodetektorenmatrix ist.

9. Bildgebungsverfahren nach einem der vorangehenden Ansprüche, wobei das Spektralphotometers am Satelliten angebracht ist.

## Claims

1. Imaging process, comprising:
- providing a spectrophotometer with imaging function, comprising:
· a matrix (8) of photodetectors distributed in columns (C) and rows (L) along two perpendicular directions (D3, D4), said photodetector matrix being placed in an image plane of the spectrophotometer;
· an interferometer (3) arranged to produce, on a column (C) of the photodetector matrix, an interferogram of a light source (S) situated in an entrance field of the spectrophotometer;
· a dispersing system (6) arranged on the path of light beams passing through the interferometer (F7), and arranged to disperse light parallel to the rows (L) of the photodetector matrix; and
· a slit (4) arranged in an intermediate image plane between the entrance of the spectrophotometer and the photodetector matrix (8), the slit having a width (ℓ) direction conjugated with the row direction (D4) of the photodetector matrix; and
· a scanning device (1) arranged at the entrance of the spectrophotometer, having two scanning directions respectively conjugated with the column direction (D3) and the row direction (D4) of the photodetector matrix (8),
- using the spectrophotometer, producing on the photodetector matrix (8) an image of the source (S) situated within the entrance field;
- dividing a wavelength variation along each line (L) of the photodetector matrix (8) into base intervals; and
- for each base interval, reporting light energy measurements collected along the column direction (D3) of the photodetector matrix (8) into light energy measurements collected along the line direction (D4) of the photodetector matrix,
process wherein the interferometer (3) has a spectral resolution (δλᵢ) less than a spectral sampling pitch of the photodetectors (δλ_{d}) along the direction of the rows (L) of the matrix, and wherein the width (ℓ) of the slit (4) is adapted so that a spectral resolution of the dispersing system generated by the slit (δλₛ) is greater than the spectral sampling pitch of the photodetectors along the row direction of the matrix (δλ_{d}),
the spectral sampling pitch of the photodetectors (δλ_{d}) along the direction of the rows (L) of the matrix being equal to a dimension (d) of said photodetectors along said row direction, divided by a linear dispersion coefficient of the dispersing system (6), and the spectral resolution of the dispersing system generated by the slit (δλₛ) being equal to the width (ℓ) of the slit (4) multiplied by an optical magnification of a part of the spectrophotometer comprised between said slit and the photodetector matrix (8), and divided by the linear dispersion coefficient of the dispersing system (6),
and a spatial resolution (δλᵢ) of theinterferometer (3) along the line direction (D4), which is equal to the spectral resolution (δλᵢ) of said interferometer multiplied by the linear dispersion coefficient of the dispersing system (6), being less than a dimension (δλₛ) of an image of the slit (4) on the photodetector matrix (8) along said row direction (D4).

2. Imaging process according to Claim 1, further comprising:
- scanning an observation field of the spectrophotometer by rotation of the scanning device (1) according to the scanning direction conjugated with the direction (D4) of the rows (L) of the photodetector matrix (8), using strips having width which corresponds to the dimension (δλₛ) of the image of the slit (4) on said photodetector matrix, along said row direction.

3. Imaging process according to Claim 1 or 2, wherein the width (ℓ) of the slit is further adapted so that the dimension (δλₛ) of the image of the slit (4) on the photodetector matrix (8) is equal to the dimension (d) of the photodetectors multiplied by R, said dimensions of the image of the slit and of the photodetectors being measured along the row direction (D4) of the photodetector matrix, where R is the quotient of the spectral sampling pitch of the photodetectors along the row direction of the matrix (δλ_{d}) divided by the spectral resolution of the interferometer (δλᵢ)

4. Imaging process according to any one of the preceding claims, wherein the interferometer (3) includes a Michelson apparatus.

5. Imaging process according to Claim 4, wherein the Michelson apparatus is provided with a planar mirror (32) and an echelette-mirror (33) arranged for reflecting respective portions of a light beam emitted by the source (S) situated in the entrance field of the spectrophotometer.

6. Imaging process according to Claim 4, wherein the Michelson apparatus is provided with two echelette-mirrors (32, 33) arranged for reflecting respective portions of a light beam emitted by the source (S) situated in the entrance field of the spectrophotometer.

7. Imaging process according to any one of Claims 4 to 6, wherein the slit (4) is placed within the interferometer (3).

8. Imaging process according to any one of the preceding claims, wherein the width (ℓ) of the slit (4) is such that the dimension (δλₛ) of the image of the slit on the photodetector matrix (8) is equal to the dimension (d) of the photodetectors multiplied by a number (N) of the photodetectors in each column (C) of said photodetector matrix.

9. Imaging process according to any one of the preceding claims, wherein the spectrophotometer is loaded on board a satellite.
